# EUROPEAN PATENT SPECIFICATION

(11) **EP 0 885 271 B1**
(45) Date of publication and mention of the grant of the patent: **31.10.2001**
(21) Application number: 97906854.1
(22) Date of filing: 07.03.1997
(51) Int. Cl.: C09K 19/30

(54) **LIQUID CRYSTAL COMPOSITION AND LIQUID CRYSTAL DISPLAY DEVICE**
FLÜSSIGKRISTALLZUSAMMENSETZUNG UND FLÜSSIGKRISTALLANZEIGEVORRICHTUNG
COMPOSITION DE CRISTAUX LIQUIDES ET DISPOSITIF D'AFFICHAGE A CRISTAUX LIQUIDES

(30) Priority: 07.03.1996 JP 8081096
(43) Date of publication of application: 23.12.1998
(73) Proprietor: CHISSO CORPORATION, Osaka-shi Osaka 530-6591 (JP)
(72) Inventor: HACHIYA, Norihisa, Yashio-shi, Saitama 340 (JP); MURASHIRO, Katsuyuki, Ichihara-shi, Chiba 290 (JP); TAKESHITA, Fusayuki, Kimitsu-shi, Chiba 299-11 (JP); MATSUSHITA, Tetsuya, Sodegaura-shi, Chiba 299-02 (JP); NAKAGAWA, Etsuo, Ichihara-shi, Chiba 290 (JP)
(74) Representative: HOFFMANN - EITLE
(86) International application number: JP9700715
(87) International publication number: WO9732942

(56) References cited:
- EP-A- 0 084 974
- EP-A- 0 096 850
- EP-A- 0 473 821
- WO-A-91/02779
- DE-A- 3 921 836
- GB-A- 2 240 778

## Description

The present invention relates to a novel liquid crystal composition and to a liquid crystal display device comprising the composition. More specifically, the present invention relates to a liquid crystal composition for display device of an active matrix addressing mode and to an active matrix addressed display device comprising the liquid crystal composition.

Since liquid crystal display devices (LCDs) have advantage of a small power consumption and a possibility for miniaturization in the volume as well as in the weight over conventional cathode ray tubes (CRTs), they have been used in practice as display devices of various modes including a twisted nematic (TN) mode, a supertwisted nematic (STN) mode or a thin film transistor (TFT) mode

Among those, display devices of an active matrix addressed mode (hereinafter sometimes abbreviated as AM-LCD) including a TFT mode has attracted public attention as a prospective winner of commercialization race for flat panel displays, since they have progressed far in colored and fine display.

As characteristics of liquid crystal compositions for the AM-LCD, the followings are required:
(1) Voltage holding ratio (hereinafter sometimes abbreviated as V.H.R.) should be high in order to keep a high contrast of LCDs.
(2) Range of nematic liquid crystal phase should be sufficiently wide under the conditions wherein liquid crystal compositions are used.
(3) Optical anisotropy value (hereinafter sometimes abbreviated as Δn) should be appropriate depending on the cell thickness to be used.
(4) Threshold voltage should be suitably low depending on driver circuit.

A LCD has recently been required to be responsive to moving images and thus various attempts have been made to satisfy the requirement.

As a driving mode for AM-LCDs, there is employed a TN display mode in which liquid crystal molecules are aligned on the inner surfaces of a pair of substrates so that longer axes of the liquid crystal molecules are twisted by 90 degrees. In the TN display mode, it is required that a product of a cell thickness (d µm) in and an optical anisotropy (Δn) of liquid crystal materials should be a constant value, for example Δn·d=0.5 µm, in order to prevent coloring due to an interference of a display when no electric field is applied thereto and to obtain a most suitable contrast in display. Considering such requirements as described above, Δn values of liquid crystal materials which have been used in practice for the AM-LCD using a first minimum transmission are in a range of approximately 0.07-0.11, especially in a range of 0.08-0.10.

Further, liquid crystal materials having a higher Δn value than those described above have quite recently been required taking a thinner cell lately developed into a consideration by which cell a more rapid electrooptical response can be expected.

Development of displays for outdoor uses has also been required recently. In order to stand outdoor uses, liquid crystal materials are required to exhibit a nematic phase in a wider temperature range than the range including temperatures at which displays are actually used. In order to expand a nematic temperature range of liquid crystal compositions, it is necessary to introduce liquid crystalline compounds having a high clearing point and a good miscibility with other liquid crystalline compounds to the liquid crystal compositions. It is known that liquid crystalline compounds having a high clearing point and having a structure formed of several six-membered rings increase a clearing point of the resulting compositions. However, such compounds as those having a high clearing point and containing several six-membered rings therein may often raise problem of decreasing the miscibility at low temperatures as well as increasing the viscosity of the resulting compositions. Thus, introduction of such compounds should be limited.

From such point of view as described above, liquid crystal compositions which have mainly been used in practice for AM-LCDs have an upper limit temperature (i.e., a clearing point T_{NI}) of a nematic phase of 80°C or higher, a lower limit temperature (usually, corresponding to a melting point T_{C}) of the nematic phase of minus 20°C or lower, and a viscosity at 20°C of 35 mPa·s or lower. Additionally, liquid crystal compositions having both a high voltage holding ratio and a high resistivity are required particularly in AM-LCDs in order to keep a high contrast in displays, which means that liquid crystal compositions having a so-called high reliability are required for AM-LCDs.

Liquid crystal materials aiming at a wide mesomorphic range or a high Δn value are disclosed in official gazetts of EP-O 084 974, DE-3 921 836 and JP-A-58-134 046. Each of those gazetts shows, as an exmaple, a mixture comprising a compound of the first component in the present invention and a compound having a terminal CN group. Liquid crystal compositions containing a compound having a terminal CN group have a defect of having a low resistivity, indicating that the liquid crystal compositions have a low voltage holding ratio at the temperatures at which they are used. Therefore, it must be judged that those compositions have too many defects as the materials to be used in AM-LCDs. Further, EP-O 084 974, DE-3 921 836 and JP-A-58-134 046 are silent on other components or their mixing proportions in the resulting mixture which are essential conditions for developing features of the present liquid crystal materials.

WO 91/02779 reveals a liquid crysalline medium having a high specific resistance and based on a mixture of polar compounds having a dielectic anisotropy greater than + 1.5. The particularly preferred compounds are compounds of the following formula: 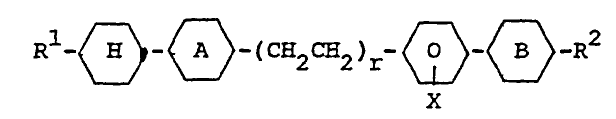 wherein the ring A is a trans-1,4-cyclohexylene or 1,4-phenylene, ring B is trans-1,4-cyclohexylene or 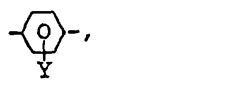 R¹ and R² are each independently alkyl of up to 9 carbon atoms, wherein one -CH₂-group may be replaced with -O-, r is 0 or 1, and X and Y each independently are H or F in one or more lateral position.

Whereas various improvements have been worked out in liquid crystal materials according to their uses, it is the present status that novel improvements are still desired in the materials.

An object of the present invention is to provide liquid crystal compositions having a high voltage holding ratio at the temperatures at which they are used, a good miscibility at low temperatures, a wide nematic range, a high optical anisotropy and/or a low viscosity.

The present invention has the following aspects: (1) A liquid crystal composition comprising, as a first component, at least one compound selected from the group of compounds expressed by general formula (1-1) or (1-2) in an amount of 3 to 40% by weight based on the total weight of the composition: 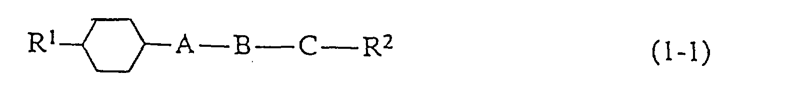 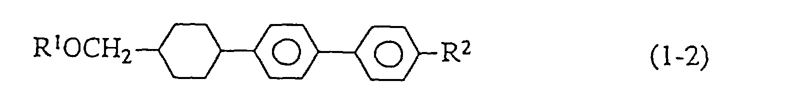 wherein R¹ and R² independently represent an alkyl group of 1-10 carbon atoms; and A, B and C independently represent 1,4-phenylene group hydrogen atom(s) at a side position in which group may be replaced by fluorine atom(s), and
comprising, as a second component, at least one compound selected from the group of compounds expressed by general formulas (2), (3), (4) or (5) in an amount of 50 to 97% weight based on the total amount of the position: 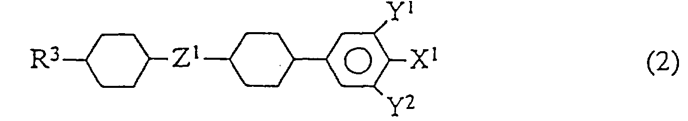 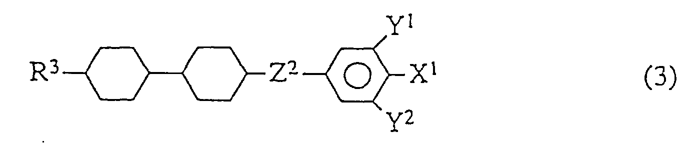 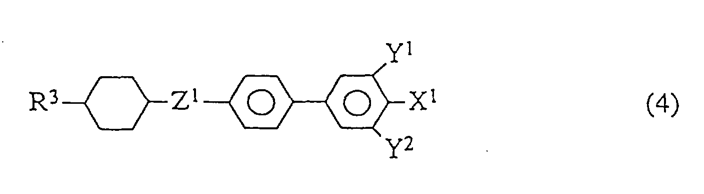 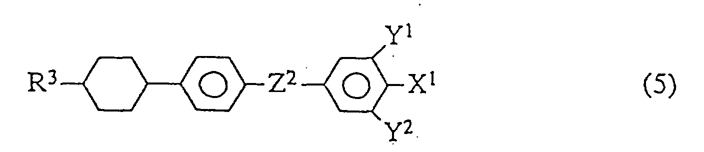 wherein R³ represents an alkyl group of 1-10 carbon atoms; X¹ represents F, Cℓ, CF₃, OCF₃ or OCHF₂; Y¹ and Y² independently represent H or F; Z¹ represents -C₂H₄-, -C₄H₈- or single bond; and Z² represents -C₂H₄-, -C₄H₈- or -COO-.

The first aspect of the present invention has embodiments (2) through (4) as follows:
(2) The liquid crystal composition recited in aspect (1)
   wherein the composition further comprises, as a third component,at least one compound selected from the group of compounds expressed by general formula (6) : 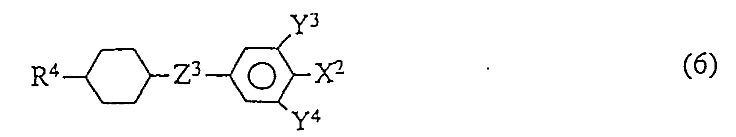 wherein R⁴ represents an alkyl group of 1-10 carbon atoms; X² represents F or Cℓ; each of Y³ and Y⁴ independently represent H or F; and Z³ represents -C₂H₄- or single bond.
(3) The liquid crystal composition recited in aspect (1) wherein the composition further comprises, as an additional component, at least one compound selected from the group of compounds expressed by general formula (7) or (8) : 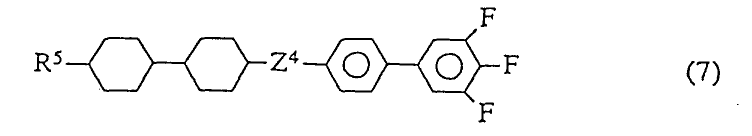 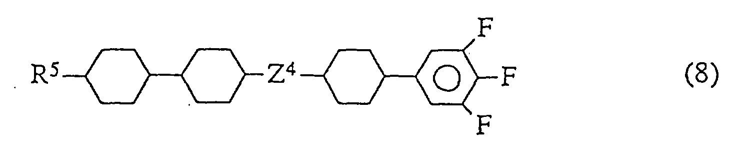 wherein R⁵ represents an alkyl group of 1-10 carbon atoms; and Z⁴ represents -C₂H₄- or single bond.
(4) The liquid crystal composition recited in any one of aspects (1) to (3) wherein the composition further comprises, as an additional component, at least one compound selected from the group of compounds expressed by general formula (9) or (10) : 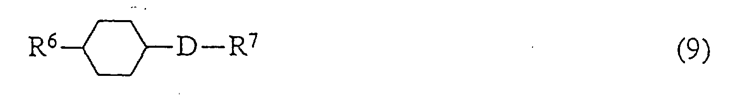 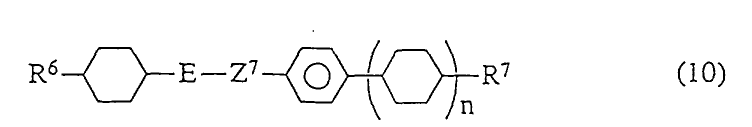 wherein R⁶ and R⁷ independently represent an alkyl group, alkoxy group, or oxaalkyl group of 1-10 carbon atoms; Z⁷ represents -CH=CH-, -C≡C-, or single bond; D represents trans-1,4-cyclohexylene group or 1,4-phenylene group; E represents trans-1,4-cyclohexylene group, or 1,4-phenylene group, wherein a hydrogen atom(s) at a side position in the phenylene group may be replaced by fluorine atom(s); and n represents 0 or 1.

As a further aspect, the present invention is concerned with a lqiuid crystal display device comprising a liquid crystal composition recited in any one of aspect or embodiments (1) to (4).

As the compound of the first component expressed by formula (1-1) or formula (1-2), compounds expressed by one of the following formulas are preferably used: 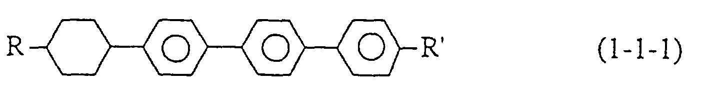 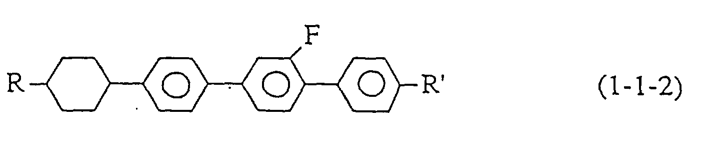 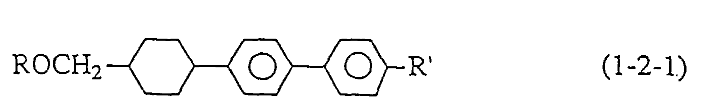 wherein R and R' represent an alkyl group of 1-10 carbon atoms.

Compounds of formula (1-1) and (1-2) are thermally stable and superior in chemical stability. They are used in the present invention with the aim of adjusting nematic range, Δn and/or viscosity of liquid crystal composition.

As the compound of the second component expressed by formula (2), (3), (4) or (5) compounds expressed by one of the following formulas are preferably used: 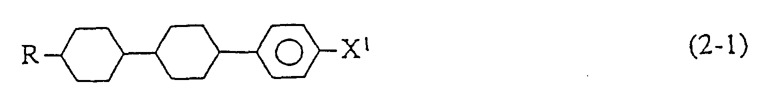 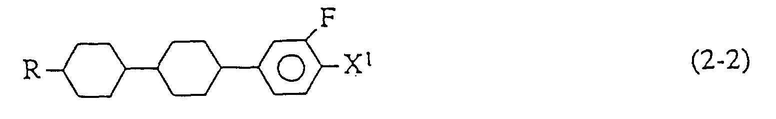 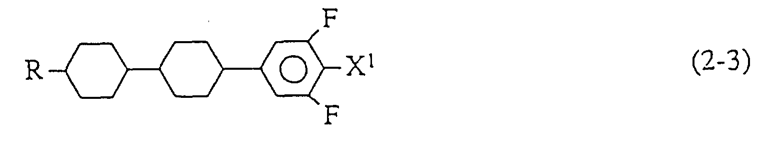 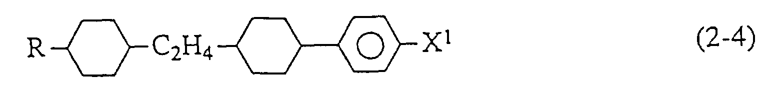 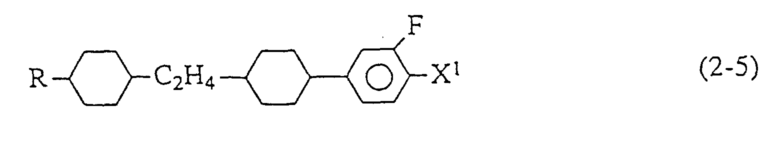 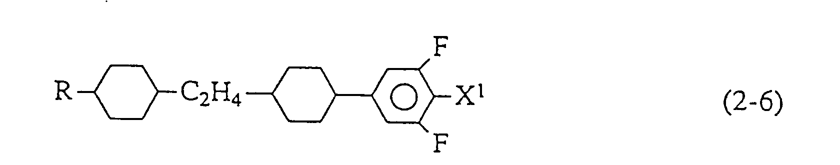 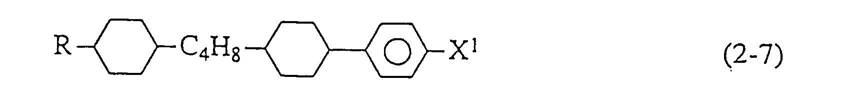 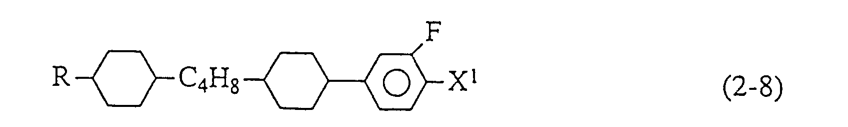 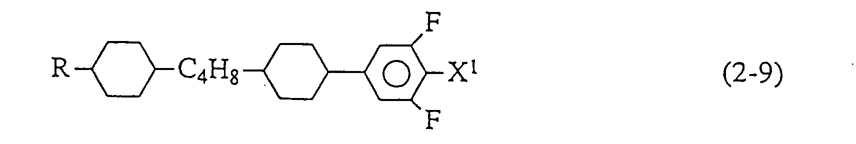 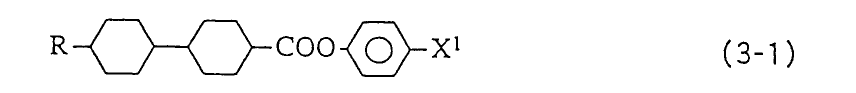 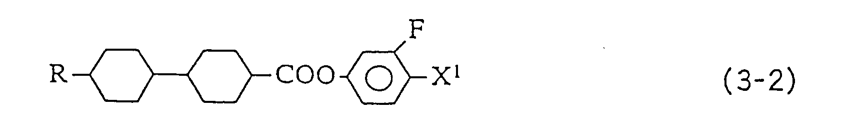 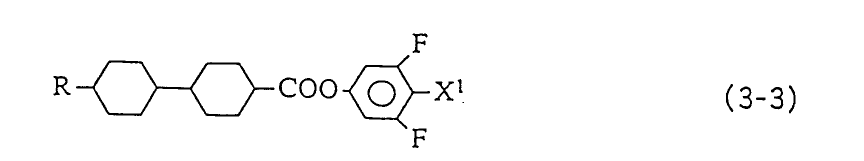 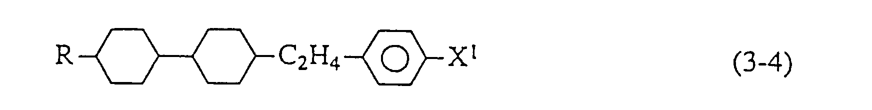 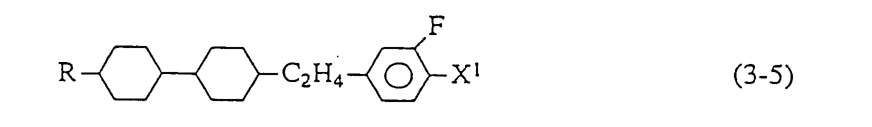 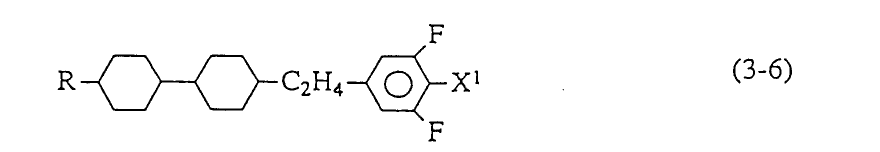 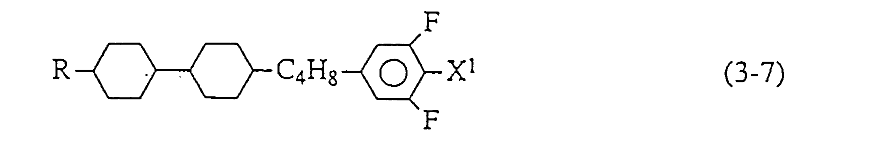 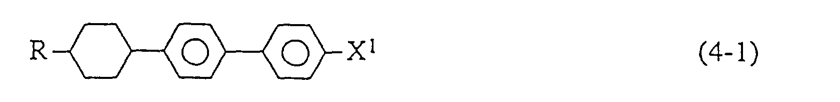 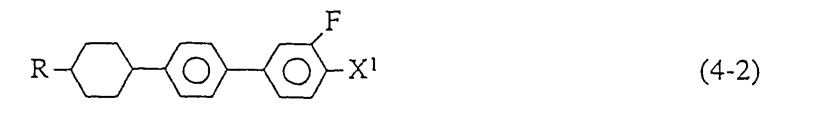 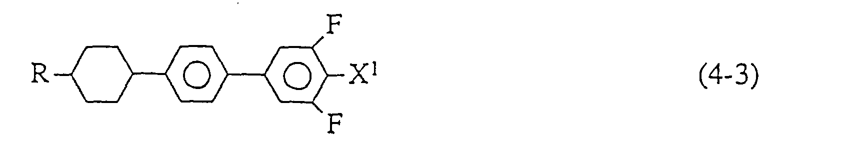 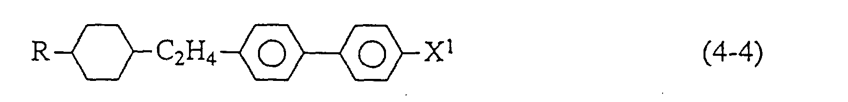 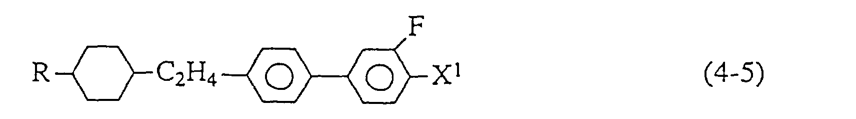 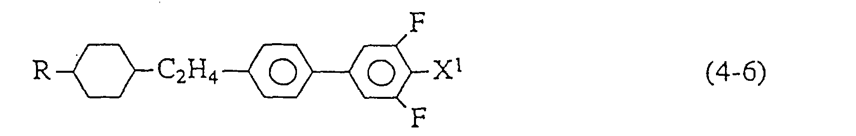 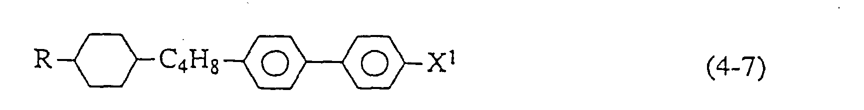 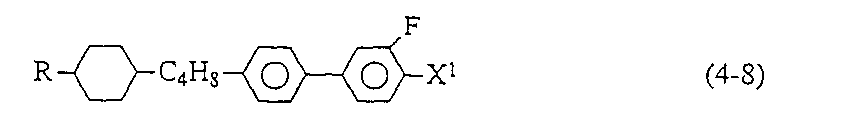 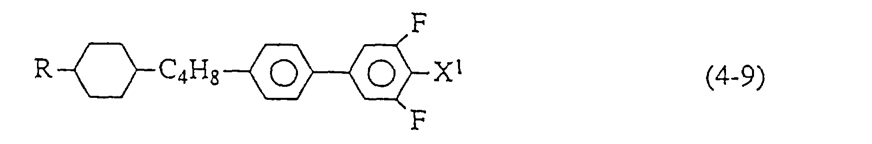 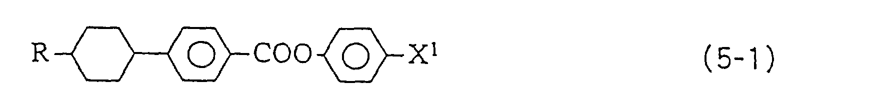 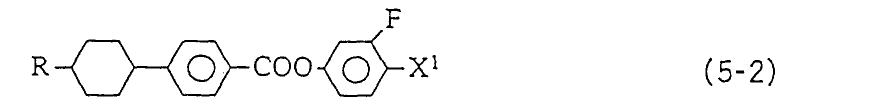 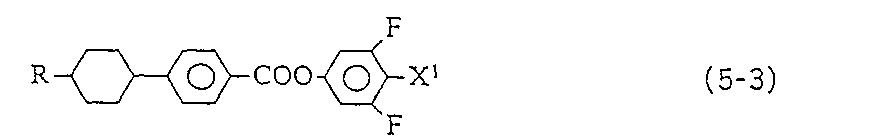 wherein R represents an alkyl group of 1-10 carbon atoms, and X¹ represents F, Cℓ, CF₃, OCF₃ or OCHF₂.

Among those compounds, more preferably used in the present invention are ones expressed by any one of formulas (2-1), (2-2), (2-3), (2-4), (2-5), (2-6), (2-7), (2-9), (3-1), (3-2), (3-3), (3-4), (3-5), (3-6), (4-1), (4-2), (4-3), (4-5), (4-6), (5-1) and (5-3).

Compounds of the second component expressed by formula. (2), (3), (4) or (5) are dielectrically positive and are very superior in thermal stability and chemical stability. Hence, those compounds play an important role in preparing liquid crystal compositions for AM-LCDs which require a high voltage holding ratio and high resistivity. Compounds of the second component are used in the present invention with an aim of mainly adjusting nematic range through, for instance, by raising clearing point, driving voltage and/or Δn of liquid crystal compositions to be obtained.

In case that an additional component is employed, compounds expressed by any one of the following formulas are preferably used as the compound expressed by formula (6).

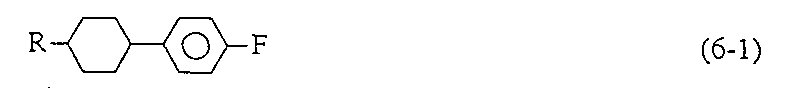

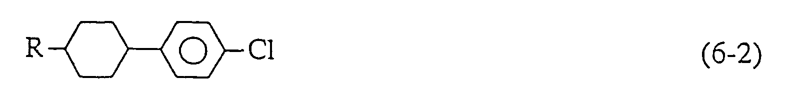

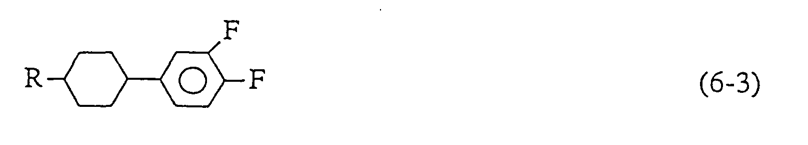

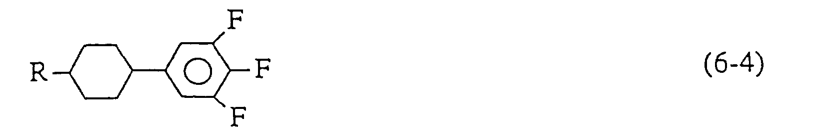

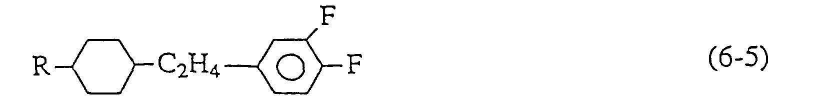

In the above formulas, R represents an alkyl group of 1-10 carbon atoms.

Compounds of formula (6) are dielectrically positive, and are superior in thermal stability and chemical stability. They are used in the present composition with an aim of mainly adjusting driving voltage and/or Viscosity of the resulting composition.

As the compound expressed by formula (7) or formula (8), compounds expressed by one of the following formulas are more preferably used.

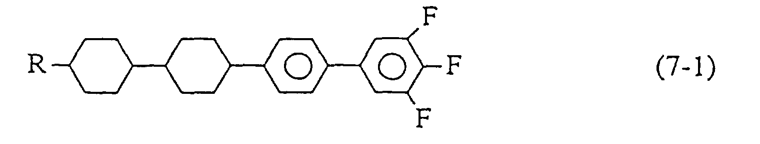

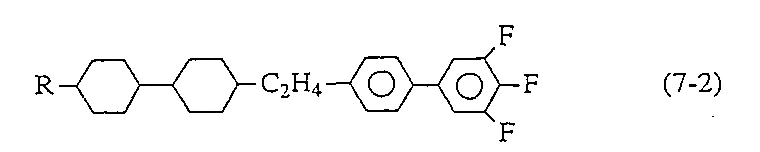

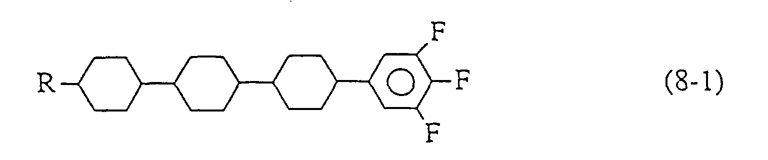

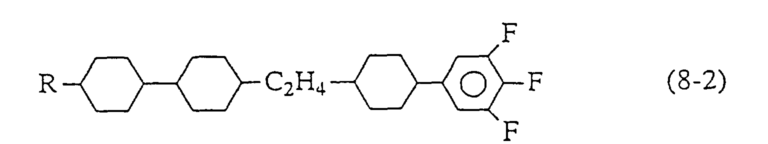

In the above formulas, R represents an alkyl group of 1-10 carbon atoms.

Among those compounds, compounds expressed by formula (7-1) or (7-2) are particularly preferred. Compounds of formulas (7) or (8) have a positive dielectric anisotropy and also have a high thermal stability and good chemical stability. They are used in the present composition with an aim of mainly adjusting nematic range through, for instance, raising clearing point.

As an additional component in the present invention expressed by formula (9) or (10), compounds expressed by any one of the following formulas are more preferably used :

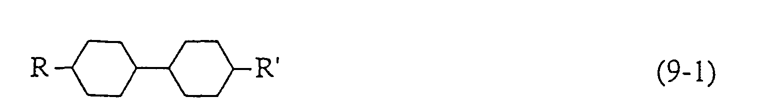

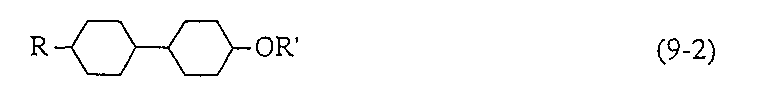

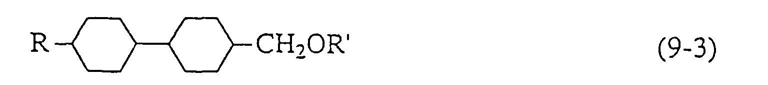

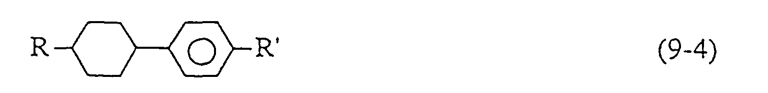

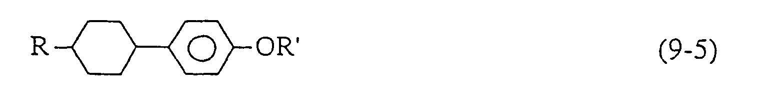

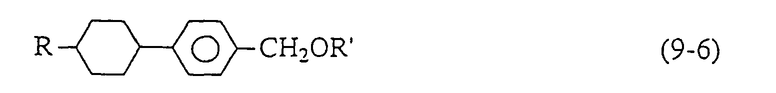

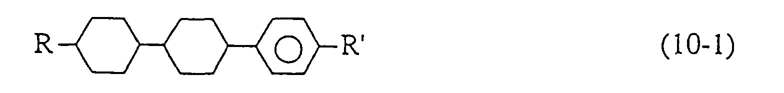

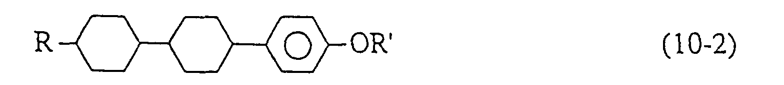

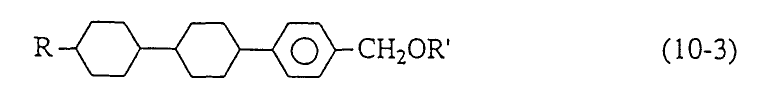

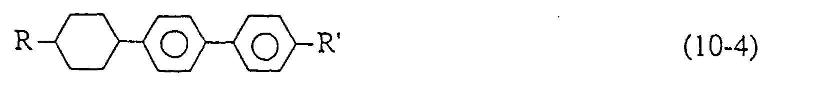

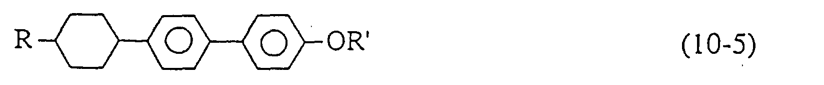

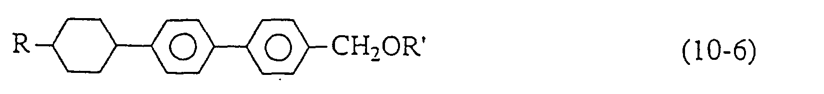

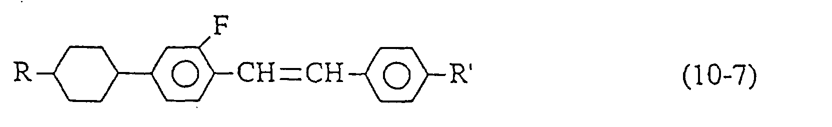

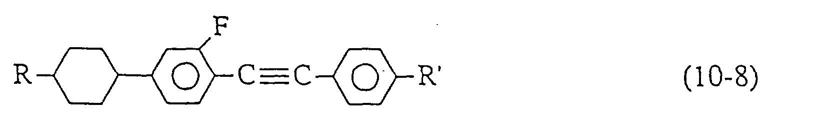

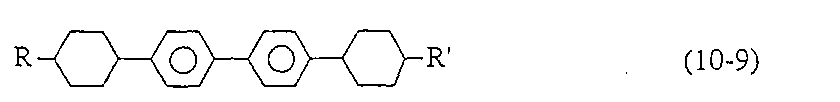

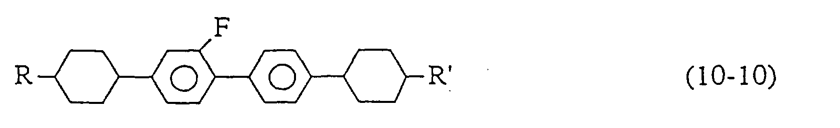

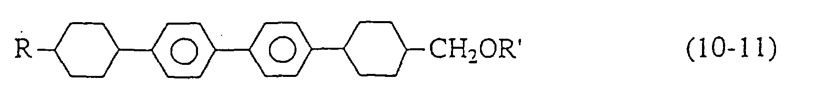

In those formulas, each of R and R' independently represents an alkyl group of 1-10 carbon atoms. Among those compounds, those ones expressed by any one of formulas (9-1), (9-3), (9-5), (10-1), (10-2), (10-4), (10-7), (10-8), (10-9), (10-10) and (10-11) are particularly preferred in the present invention.

Compounds expressed by formula (9) have a negative or small positive dielectric anisotropy and have two six-membered rings in their chemical structure. Those compounds are employed in the composition with an aim of reducing viscosity of the resulting composition and/or adjusting Δn thereof.

Compounds of formula (10) are dielectrically negative or slightly positive. These compounds have three or four six-membered rings in their chemical structure. These compounds are employed in the present liquid crystal mixtures with an aim of expanding nematic range thereof by elevating clearing point and/or with an aim of adjusting Δn of the resulting mixture.
The content of the first component in the present composition is 3-40% by weight based on the total weight of the composition. A preferable content of the first component is 5-20% by weight of the composition. When the content of the first component is less than 3% by weight, effect of raising clearing point and increasing Δn which are objects of the present invention will not be achieved. When the content of the first component exceeds 40% by weight, viscosity of the resulting composition often becomes high.
The content of the second component is 50-97% by weight based on the total weight of the liquid crystal composition. A preferable content of the second component is 60-95% by weight of the total weight of the composition. When the content of the second component is less than 50% by weight, a nematic range of the resulting composition will be reduced, and effect of lowering a threshold voltage will not be achieved. When the content of the second component exceeds 97% by weight, effect of elevating a clearing point of the composition will not be achieved.

When the compound of formula (6) are used as an additional component in the composition, their content in the composition is preferably 30% by weight or lower based on the total weight of the resulting composition. A more preferable mixing proportion of this additional component is 20% by weight or lower. When the content of the compound of formula (6) exceeds 30% by weight in the composition, effect of elevating clearing point of the resulting composition will be unsatisfied.

When the compound of formula (7) or formula (8) are employed as an additional component, content of the compound in the composition is preferably 20% by weight or lower based on the total weight of the composition. A more preferable content of the compound of formula (7) or formula (8) is 15% by weight or lower. When the content of the compound of formula (7) or (8) exceeds 20% by weight in the composition, viscosity of the resulting liquid crystal compositions will become high.

When the compound of formula (9) or formula (10) are used as an additional component in the present composition, content of the compound is preferably 30% by weight or lower based on the total weight of the composition. A more preferable content of the compound is 20% by weight or lower. When the content of the compound of formula (9) or formula (10) exceeds 30% by weight, lowering of threshold voltage in the resulting composition will be insufficient.

Liquid crystal compositions of the present invention may contain other compounds than those described above as far as the objects of the present invention are accomplished.

Liquid crystal compositions of the present invention can be prepared by methods which are conventional by themselves. Usually, preparation of the composition is carried out by melting various compounds at an elevated temperature to prepare a uniform mixture.

Further, the liquid crystal compositions of the present invention can be modified with additives so that the compositions can satisfactorily be applied in intended uses. Such additives are well known by persons skilled in the art and are reported in detail in the literatures. Most probable additive is a chiral dopant which induce a helical structure to adjust twist angle to effectively prevent a reverse twist of liquid crystal molecules.

Furthermore, the present compositions can be used in guest and host(GH) mode display devices by adding a dichroic dyestuff such as merocyanines, styryl derivatives, azo compounds, azomethines, azoxy compounds, quinophthalones, anthraquinones and tetrazine derivatives.

It is also possible to use the present compositions for NCAP prepared by microencapsulating nematic liquid crystals, or for polymer dispersion type display devices (PDLCDs) including, as a typical example, polymer net-work liquid crystal display devices (PNLCDs) having three-dimensional, reticulated polymers formed in liquid crystals. Besides, it is possible to use the present liquid crystal compositions as liquid crystal material for displays of an electrically controlled birefringence (ECB) mode or dynamic scattering (DS) mode.

Particularly preferable embodiments of the liquid crystal compositions in the present invention are shown in the following items (a) through (g) :
(a) A liquid crystal composition comprising, as a first component, at least one compound selected from the group of compounds expressed by the formula (1-1-1), (1-1-2) or (1-2-1) mentioned above, and comprising, as a second component, at least one compound selected from the group of compounds expressed by the formula (2-1), (2-2), (2-3), (2-4), (2-5), (2-6), (2-9), (3-1), (3-2), (3-3), (3-4), (3-5), (3-6), (4-1), (4-2), (4-3), (4-5), (4-6), (5-1) or (5-3) mentioned above,
   concent of the first and second components in the composition being 5-20% by weight and 60-95% by weight, respectively, each based on the total weight of the composition.
(b) A liquid crystal composition set forth in item (a) wherein the composition further comprises, as an additional component, at least one component selected from the group of compounds expressed by the formula (6-1), (6-2), (6-3), (6-4) or (6-5) mentioned above,
   content of the additional component in the composition being 20% by weight or lower based on the total weight of the composition.
(c) A liquid crystal composition set forth in item (a) wherein the composition further comprises, as an additional component, at least one compound selected from the group of compounds expressed by the formula (7-1) or (7-2) mentioned above,
   content of the additional component in the composition being 15% by weight or lower based on the total weight of the composition.
(d) A liquid crystal composition set forth in item (a) wherein the composition further comprises, as an additional component, at least one compound selected from the group of compounds expressed by the formula (9-1), (9-3), (9-5), (10-1), (10-2), (10-7), (10-9), (10-10) or (10-11) mentioned above,
   content of the additional component in the composition being 20% by weight or lower based on the total weight of the composition.
(e) A liquid crystal composition set forth in item (a) wherein the composition further comprises, as a third component, at least one compound selected from the group of compounds expressed by the formula (6-1), (6-2), (6-3), (6-4) or (6-5) mentioned above, and comprises, as a fourth component, at least one compound selected from the group of compounds expressed by the formula (7-1) or (7-2) mentioned above,
   content of the third and fourth components in the composition being 20% by weight or lower, and 15% by weight or lower, respectively, each based on the total weight of the composition.
(f) A liquid crystal composition set forth in item (a) wherein the composition further comprises, as a third component, at least one compound selected from the group of compounds expressed by the formula (6-1), (6-2), (6-3), (6-4) or (6-5) mentioned above, and comprises, as a fourth component, at least one compound selected from the group of compounds expressed by the formula (9-1),(9-3), (9-5), (10-1), (10-2), (10-7), (10-9), (10-10) or (10-11) mentioned above, each of the third component and the fourth component being contained in an amount of 20% by weight or lower in the composition based on the total weight thereof.
(g) A liquid crystal composition set forth in item (a) wherein the composition further comprises, as a third component, at least one compound selected from the group of compounds expressed by the formula (6-1), (6-2), (6-3), (6-4) or (6-5) mentioned above, comprises, as a fourth component, at least one compound selected from the group of compounds expressed by the formula (7-1) or (7-2) mentioned above, and comprises,as a fifth component, at least one compound selected from the group of compounds expressed by the formula (9-1), (9-3), (9-5), (10-1), (10-2), (10-7), (10-9), (10-10) or (10-11) mentioned above, the third component, the fourth component, and the fifth component being contained in an amount of 20% by weight or lower, 15% by weight or lower, and 20% or lower, respectively, in the composition based on the total weight thereof.

### Examples

Now, the present invention will be described in more detail with reference to Examples and Comparative Examples.

In these examples, chemical compositions of the liquid crystal composition is expressed in percent by weight.

Further, the compounds in the compositions are expressed by combination of symbols as defined in Table 1.

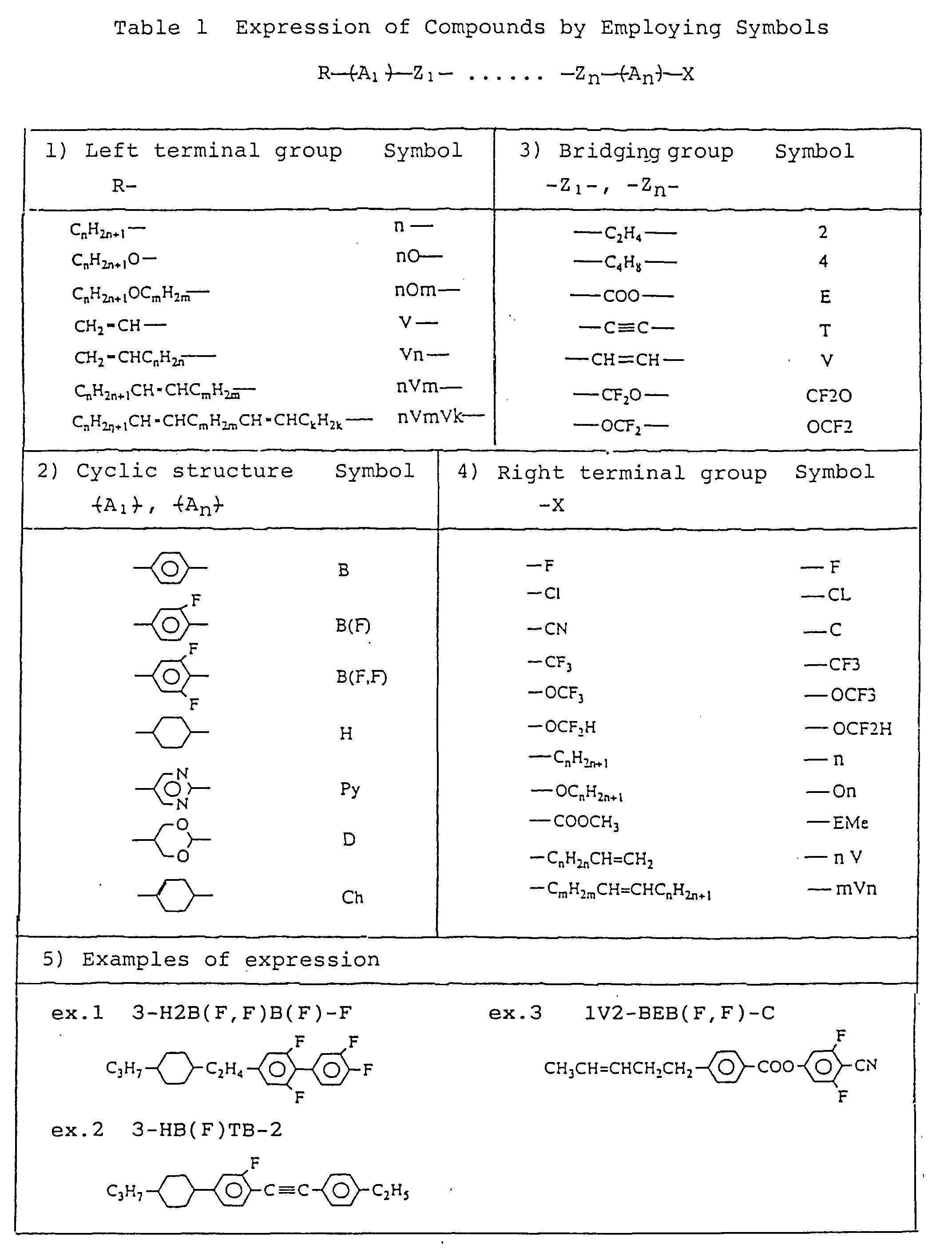

As specific characteristics of liquid crystal compositions, clearing point (T_{NI}), eutectic point (T_{c}), viscosity at 20°C (η₂₀), optical anisotropy at 25°C (Δn), dielectric anisotropy at 25°C (Δε), threshold voltage at 25°C, and voltage holding ratio at 25°C were determined.

Voltage holding ratio (V.H.R.) was measured according to a modified "Methodsfor Measuring Liquid Crystal Display Panels and Constructive Materials" which is a Standard of Electronic Industries Association of Japan, EIAJ ED-2521A. A sample liquid crystal composition was filled in a cell having a pair of substrates inner surfaces coated with polyimide films for aligning liquid crystals which films are facing each other with a distance of 6 µm to prepare a liquid crystal display device. An alternating pulse having a wave height of ±5V, a pulse width of 60 µs, and a period of 30Hz was applied across the cell, and wave forms between the cell electrodes was observed by using a cathode ray oscilloscope. A ratio of integrated absolute values of observed voltage in a unit period (area) to a product of the applied voltage and the unit period (area) is expressed by percent and the ratio was defined as voltage holding ratio (%).

Eutectic point (T_{c}) of a liquid crystal compositions was determined by keeping portions of the same sample liquid crystal for 30 days in freezers kept at a temperature of 0°C, -10°C, -20°C or -30°C, and then observing the conditions of the sample in each of the freezers to find the lowest freezing temperature at which no crystals were formed. For example, if the same sample liquid crystal formed crystals in the freezer kept at -20°C and that kept at -30°C, but did not form crystals in a freezer kept at -10°C, then T_{c} of the sample is expressed as "lower than -10°C" or (<-10°C).

### Comparative example 1

Liquid crystal composition comprising the following compounds and disclosed in EP-O 084 974 was prepared:

| | |
|---|---|
| 5-HBBB-2 | 5.0% |
| 3-HB-C | 26.6% |
| 5-HB-C | 40.8% |
| 7-HB-C | 27.6% |

Chracteristic values of this composition were as follows:
T_{NI}=61.5°C
T_{c}<0°C
η₂₀=24.8mPa.s
Δn=0.126
Vₜₕ=1.62V
V.H.R.=94.3%

This liquid crystal composition had a narrow nematic range, low V.H.R., and high eutectic point which means a poor miscibility with other liquid crystalline compounds at low temperatures. Further, the viscosity of this composition is considered to be high for its clearing point of about 60°C. Thus, the composition lacks a practical utility.

### Comparative example 2

Liquid crystal composition comprising the following compounds and disclosed in JP-A-58-134 046 was prepared:

| | |
|---|---|
| 201-HBB-1 | 15.0% |
| 3-HB-C | 25.5% |
| 5-HB-C | 34.0% |
| 7-HB-C | 25.5% |

Chracteristic values of this composition were as follows:
T_{NI}=60.7°C
T_{c}<0°C
η₂₀=24.8mPa.s
Δn=0.128
Vₜₕ=1.66V
V.H.R.=95.1%

This liquid crystal composition exhibited a low V.H.R., poor miscibility at low temperatures, and narrow nematic temperature range. Considering from its clearing point of about 60°C, the composition showed a high viscosity. Thus, the composition is considered to be short of practical utility.

### Comparative example 3

Liquid crystal composition comprising the following compounds and disclosed in DE-3 921 836 was prepared:

| | |
|---|---|
| 5-HBB(F)B-3 | 10.0% |
| ZLI-1565 | 90.0% |

ZLI-1565 is a liquid crystal mixture produced by E. Merck.

Characteristic values of this composition were as follows:
T_{NI}=117.0°C
T_{c}<-20°C
η₂₀=17.6mPa.s
Δn=0.163
Δ∈=7.9
Vₜₕ=2.63V
V.H.R.=95.6%

This liquid crystal composition had a wide nematic temperature range and a low viscosity. However, it was considered to be short of practical utility since it had a low V.H.R.

### Example 1

Liquid crystal composition comprising the following compounds was prepared:

| | |
|---|---|
| 5-HBB(F)B-2 | 10.0% |
| 3-H2HB(F,F)-F | 12.0% |
| 4-H2HB(F,F)-F | 10.0% |
| 5-H2HB(F,F)-F | 10.0% |
| 3-HHB(F,F)-F | 10.0% |
| 3-HH2B(F,F)-F | 15.0% |
| 5-HH2B(F,F)-F | 10.0% |
| 3-HBB(F,F)-F | 12.0% |
| 5-HBB(F,F)-F | 11.0% |

Chracteristic values of this composition were as follows:
T_{NI}=101.2°C
T_{c}<-30°C
η₂₀=28.4mPa.s
Δn=0.105
Δ∈=8.1
Vₜₕ=1.87V
V.H.R.=98.5%

This liquid crystal composition had a good miscibility at low temperatures, wide nematic range, and high V.H.R. Further, considering its clearing point of about 100°C, the composition had a low viscosity. Thus, the composition is considered to have a great utility in practice.

### Example 2

Liquid crystal composition comprising the following compounds was prepared:

| | |
|---|---|
| 5-HBB(F)B-2 | 9.0% |
| 5-HBBB-2 | 3.0% |
| 101-HBB-4 | 3.0% |
| 3-HHB(F,F)-F | 8.0% |
| 3-H2HB(F,F)-F | 5.0% |
| 5-H2HB(F,F)-F | 5.0% |
| 3-HH2B(F,F)-F | 5.0% |
| 3-HBB(F,F)-F | 25.0% |
| 5-HBB(F,F)-F | 22.0% |
| 3-HBEB(F,F)-F | 5.0% |
| 3-HHEB(F,F)-F | 10.0% |

Chracteristic values of this composition were as follows:
T_{NI}=101.7°C
T_{c}<-30°C
η₂₀=33.6mPa.s
Δn=0.127
Δ∈=9.8
Vₜₕ=1.66V
V.H.R.=98.4%

### Example 3

Liquid crystal composition comprising the following compounds was prepared:

| | |
|---|---|
| 3O1-HBB-2 | 5.0% |
| 2-HHB(F)-F | 6.6% |
| 3-HHB(F)-F | 6.7% |
| 5-HHB(F)-F | 6.7% |
| 2-HBB(F)-F | 8.5% |
| 3-HBB(F)-F | 8.5% |
| 5-HBB(F)-F | 17.0% |
| 2-HBB-F | 3.0% |
| 3-HBB-F | 4.0% |
| 3-HHB-F | 4.0% |
| 3-HBB(F,F)-F | 20.0% |
| 5-HBB(F,F)-F | 10.0% |

Chracteristic values of this composition were as follows:
T_{NI}=89.0°C
T_{c}<-20°C
η₂₀=28.3mPa.s
Δn=0.125
Δ∈=7.3
Vₜₕ=1.81V
V.H.R.=98.7%

### Example 4

Liquid crystal composition comprising the following compounds was prepared:

| | |
|---|---|
| 3-HBB(F)B-1 | 3.0% |
| 5-HBB(F)B-2 | 7.0% |
| 7-HB-CL | 7.0% |
| 7-HB(F,F)-F | 10.0% |
| 2-HBB(F)-F | 7.5% |
| 3-HBB(F)-F | 7.5% |
| 5-HBB(F)-F | 15.0% |
| 2-HHB-CL | 5.0% |
| 4-HHB-CL | 10.0% |
| 3-HBB(F,F)-F | 12.0% |
| 5-HBB(F,F)-F | 11.0% |
| 5-H2BB(F)-F | 5.0% |

Chracteristic values of this composition were as follows:
T_{NI} =96.80°C
T_{c}<-30°C
η₂₀=27.4mPa.s
Δn=0.132
Δ∈=6.0
Vₜₕ=2.00V
V.H.R.=98.8%

### Example 5

Liquid crystal composition comprising the following compounds was prepared:

| | |
|---|---|
| 5-HBB(F)B-2 | 6.0% |
| 501-HBB-2 | 5.0% |
| 3-HHB(F,F)-F | 9.0% |
| 4-HHB(F,F)-F | 4.0% |
| 3-H2HB(F,F)-F | 10.0% |
| 5-H2HB(F,F)-F | 10.0% |
| 3-HH2B(F,F)-F | 10.0% |
| 5-HH2B(F,F)-F | 7.0% |
| 3-HBB(F,F)-F | 11.0% |
| 5-HBB(F,F)-F | 11.0% |
| 5-H2BB(F,F)-F | 10.0% |
| 3-HHBB(F,F)-F | 3.0% |
| 5-HH2BB(F,F)-F | 4.0% |

Chracteristic values of this composition were as follows:
T_{NI}=100.5°C
T_{c}<-30°C
η₂₀=28.5mPa.s
Δn=0.108
Δ∈=8.4
Vₜₕ=1.86V
V.H.R.=98.5%

### Example 6

Liquid crystal composition comprising the following compounds was prepared:

| | |
|---|---|
| 5-HBB(F)B-1 | 3.0% |
| 5-HBB(F)B-2 | 3.0% |
| 2-HHB(F)-F | 10.0% |
| 3-HHB(F)-F | 10.0% |
| 5-HHB(F)-F | 10.0% |
| 2-H2HB(F)-F | 4.0% |
| 3-H2HB(F)-F | 2.0% |
| 5-H2HB(F)-F | 4.0% |
| 2-HBB(F)-F | 9.5% |
| 3-HBB(F)-F | 9.5% |
| 5-HBB(F)-F | 19.0% |
| 3-HB-O2 | 9.0% |
| 3-HHB-O1 | 7.0% |

Chracteristic values of this composition were as follows:
T_{NI}=115.1°C
T_{c}<-30°C
η₂₀=25.8mPa.s
Δn=0.118
Δ∈=4.3
Vₜₕ=2.64V
V.H.R.=98.7%

### Example 7

Liquid crystal composition comprising the following compounds was prepared:

| | |
|---|---|
| 5-HBB(F)B-3 | 3.0% |
| 5-HBB(F)B-2 | 6.0% |
| 5-H2B(F)-F | 4.0% |
| 5-HB-CL | 12.0% |
| 3-HHB(F,F)-F | 10.0% |
| 3-HBB(F,F)-F | 15.0% |
| 5-HBB(F,F)-F | 13.0% |
| 3-HHEB(F,F)-F | 10.0% |
| 4-HHEB(F,F)-F | 3.0% |
| 5-HHEB(F,F)-F | 3.0% |
| 3-HBEB(F,F)-F | 3.0% |
| 5-HBEB(F,F)-F | 3.0% |
| 3-HH-4 | 9.0% |
| 3-HHB-1 | 4.0% |
| 3-HH2BB(F,F)-F | 2.0% |

Chracteristic values of this composition were as follows:
T_{NI}=90.2°C
T_{c}<-30°C
η₂₀=21.4mPa.s
Δn=0.109
Δ∈=6.7
Vₜₕ=1.79V
V.H.R.=98.6%

### Example 8

Liquid crystal composition comprising the following compounds was prepared:

| | |
|---|---|
| 101-HBB-2 | 5.0% |
| 5-HBB(F)B-3 | 5.0% |
| 7-HB(F)-F | 9.0% |
| 3-HHB-OCF3 | 10.0% |
| 5-HHB-OCF3 | 10.0% |
| 3-HH2B-OCF3 | 5.0% |
| 5-HH2B-OCF3 | 4.0% |
| 3-HH2B(F)-F | 10.0% |
| 5-HH2B(F)-F | 10.0% |
| 3-HHB(F,F)-F | 8.0% |
| 3-HBB(F,F)-F | 12.0% |
| 3-HHEB-F | 3.0% |
| 3-HBEB-F | 3.0% |
| 101-HH-3 | 3.0% |
| 3-HB(F)VB-2 | 3.0% |

Chracteristic values of this composition were as follows:
T_{NI}=114.0°C
T_{c}<-20°C
η₂₀=23.1mPa.s
Δn=0.101
Δ∈=5.1
Vₜₕ=2.49V
V.H.R.=98.6%

### Example 9

Liquid crystal composition comprising the following compounds was prepared:

| | |
|---|---|
| 5-HBB(F)B-3 | 5.0% |
| 5-HB-F | 6.0% |
| 7-HB-F | 6.0% |
| 7-HB(F,F)-F | 7.0% |
| 2-HHB-OCF3 | 8.0% |
| 4-HHB-OCF3 | 7.0% |
| 5-HHB-OCF3 | 10.0% |
| 3-HBB(F)-F | 13.0% |
| 5-HBB(F)-F | 10.0% |
| 3-H2HB-OCF3 | 4.0% |
| 5-H2HB-OCF3 | 4.0% |
| 3-HBB(F,F)-F | 14.0% |
| 5-HBBH-3 | 2.0% |
| 5-HB(F)BH-3 | 2.0% |
| 101-HBBH-3 | 2.0% |

Chracteristic values of this composition were as follows:
T_{NI}=102.6°C
T_{c}<-30°C
η₂₀=22.3mPa.s
Δn=0.112
Δ∈=4.6
Vₜₕ=2.24V
V.H.R.=98.0%

### Example 10

Liquid crystal composition comprising the following compounds was prepared:

| | |
|---|---|
| 201-HBB-1 | 6.0% |
| 201-HBB-2 | 6.0% |
| 5-HB-F | 6.0% |
| 6-HB-F | 6.0% |
| 3-HHB-OCF3 | 9.0% |
| 5-HHB-OCF3 | 10.0% |
| 3-HHB-OCF2H | 5.0% |
| 5-HHB-OCF2H | 4.0% |
| 3-HHB(F,F)-OCF2H | 7.0% |
| 5-HHB(F,F)-OCF2H | 13.0% |
| 3-HH2B(F)-F | 10.0% |
| 3-HHEB(F)-F | 5.0% |
| 5-HHEB(F)-F | 5.0% |
| 3-HHB-F | 3.0% |
| 3-HHEB-OCF3 | 3.0% |
| 3-H4HB(F,F)-CF3 | 2.0% |

Chracteristic values of this composition were as follows:
T_{NI}=99.6°C
T_{c}<-20°C
η₂₀=21.9mPa.s
Δn=0.090
Δ∈=6.0
Vₜₕ=2.27V
V.H.R.=98.5%

### Example 11

Liquid crystal composition comprising the following compounds was prepared:

| | |
|---|---|
| 301-HBB-2 | 3.0% |
| 5-HBBB-2 | 3.0% |
| 3-HBB(F)B-1 | 5.0% |
| 5-H2B(F)-F | 8.0% |
| 2-HHB(F)-F | 11.6% |
| 3-HHB(F)-F | 11.7% |
| 5-HHB(F)-F | 11.7% |
| 2-HBB(F)-F | 5.0% |
| 3-HBB(F)-F | 5.0% |
| 5-HBB(F)-F | 10.0% |
| 3-HHB-F | 5.0% |
| 3-HHEB(F,F)-F | 10.0% |
| 3-HH2B(F,F)-F | 7.0% |
| 2-HHBB(F,F)-F | 2.0% |
| 3-HH2BB(F,F)-F | 2.0% |

Chracteristic values of this composition were as follows:
T_{NI}=113.3°C
T_{c}<-20°C
η₂₀=25.0mPa.s
Δn=0.108
Δ∈=6.6
Vₜₕ=2.25V
V.H.R.=98.6%

### Example 12

Liquid crystal composition comprising the following compounds was prepared:

| | |
|---|---|
| 5-HBBB-2 | 5.0% |
| 2-HHB(F)-F | 8.0% |
| 3-HHB(F)-F | 8.0% |
| 5-HHB(F)-F | 8.0% |
| 2-HBB(F)-F | 8.5% |
| 3-HBB(F)-F | 8.5% |
| 5-HBB(F)-F | 17.0% |
| 2-HBB-F | 3.0% |
| 3-HBB-F | 3.0% |
| 3-HBB(F,F)-F | 5.0% |
| 5-HBB(F,F)-F | 10.0% |
| 7-HB(F)-F | 9.0% |
| 3-HB-O2 | 7.0% |

Chracteristic values of this composition were as follows:
T_{NI}=86.1°C
T_{c}<-30°C
η₂₀=23.9mPa.s
Δn=0.117
Δ∈=5.8
Vₜₕ=1.91V
V.H.R.=98.7%

### INDUSTRIAL APPLICABILITY

As will be seen from the examples, the present invention provides liquid crystal compositions for display devices of an active matrix addressing mode, which composition has a low viscosity, large optical anisotropy, and wide nematic range along with a good miscibility at low temperatures. By employing the present composition, liquid crystal display devices having a high voltage holding ratio can be provided.

## Claims

1. A liquid crystal composition comprising, as a first component, at least one compound selected from the group of compounds expressed by general formula (1-1) or (1-2) in an amount of 3 to 40 % by weight based on the total weight of the composition: 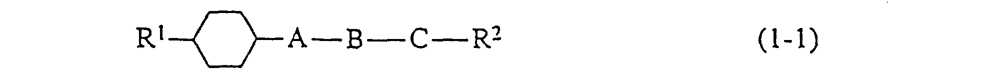 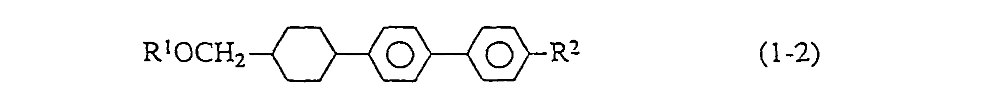 wherein R¹ and R² independently represent an alkyl group of 1-10 carbon atoms; and A, B and C independently represent 1,4-phenylene group hydrogen atom(s) at a side position in which group may be replaced by a fluorine atom(s), and
comprising, as a second component, at least one compound selected from the group of compounds expressed by general formula (2), (3), (4) or (5)
in an amount of 50 to 97 % by weight based on the total amount of the composition: 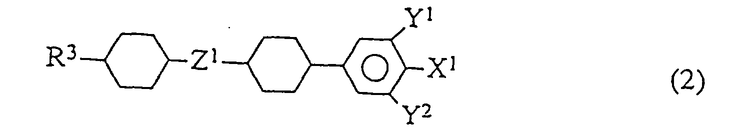 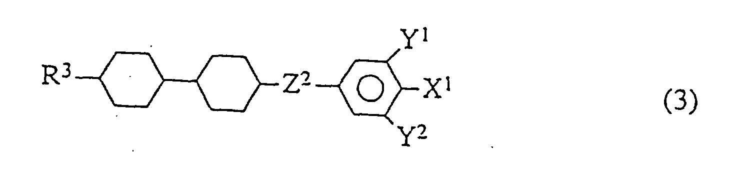 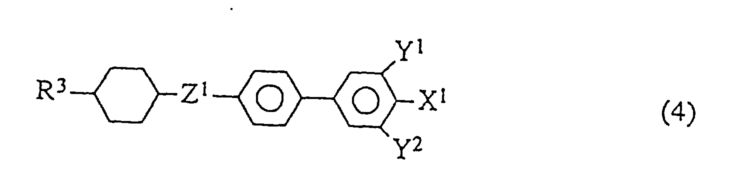 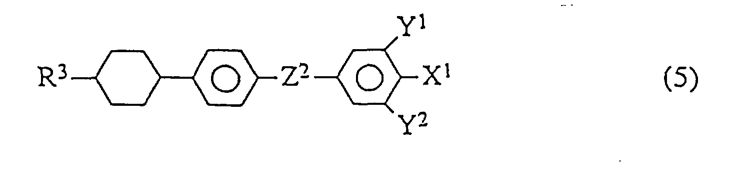 wherein R³ represents an alkyl group of 1-10 carbon atoms; X¹ represents F, Cℓ, CF₃, OCF₃, or OCHF₂; Y¹ and Y² independently represent H or F; Z¹ represents -C₂H₄-, -C₄H₈- or single bond; and Z² represents -C₂H₄-, -C₄H₈- or -COO-.

2. The liquid crystal composition according to claim 1 wherein said composition further comprises, as a third component, at least one compound expressed by general formula (6): 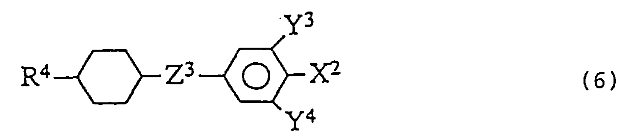 wherein R⁴ represents an alkyl group of 1-10 carbon atoms; X² represents F or Cℓ; each of Y³ and Y⁴ independently represents H or F; and Z³ represents -C₂H₄- or single bond.

3. The liquid crystal composition according to claim 1
wherein said composition further comprises, as a third component, at least one compound selected from the group of compounds expressed by general formula (7) or (8) : 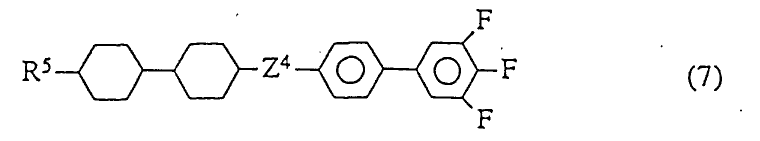 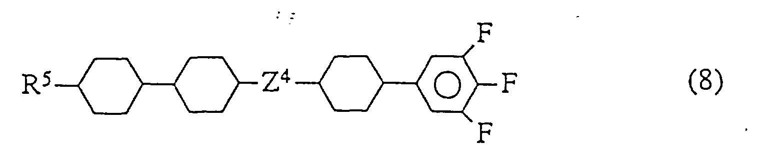 wherein R⁵ represents an alkyl group of 1-10 carbon atoms; and Z⁴ represents -C₂H₄- or single bond.

4. The liquid crystal composition according to claim 2 wherein said composition further comprises, as a fourth component, at least one member selected from the group expressed by general formula (7) or general formula (8) : 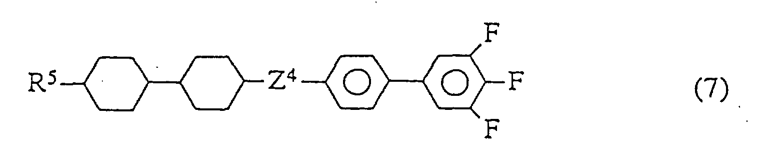 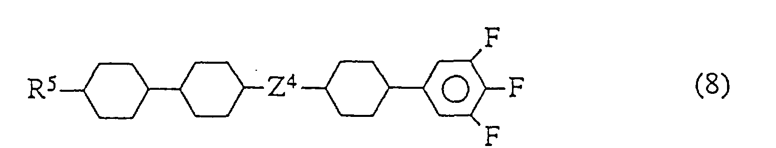 wherein R⁵ represents an alkyl group of 1-10 carbon atoms; and Z⁴ represents -C₂H₄- or single bond.

5. The liquid crystal composition according to any one of the claims 1 to 4, wherein said composition further comprises, as a third component, at least one compound selected from the group of compounds expressed by general formula (9) or (10) : 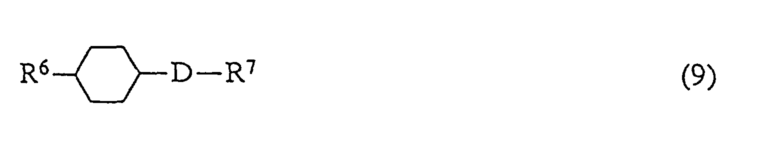 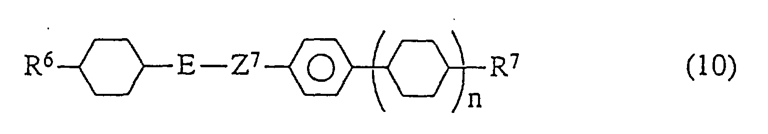 wherein R⁶ and R⁷ independently represent an alkyl group, alkoxy group, or oxaalkyl group of 1-10 carbon atoms; Z⁷ represents -CH=CH-, -C≡C-, or single bond; D represents trans-1,4-cyclohexylene group or 1,4-phenylene group; E represents trans-1,4-cyclohexylene group, or 1,4-phenylene group a hydrogen atom(s) at a side position in which phenylene group may be replaced by fluorine atom(s); and n represents 0 or 1.

6. A liquid crystal display device comprising a liquid crystal composition as set forth in any one of claims 1 to 5.

## Patentansprüche

1. Flüssigkristallzusammensetzung, umfassend als erste Komponente zumindest eine Verbindung, ausgewählt aus der Gruppe von Verbindungen mit der allgemeinen Formel (1-1) oder (1-2) in einer Menge von 3 bis 40 Gew.-%, bezogen auf das Gesamtgewicht der Zusammensetzung: 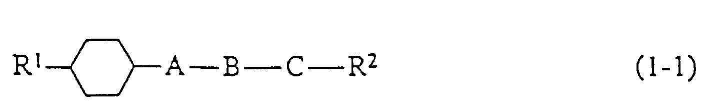 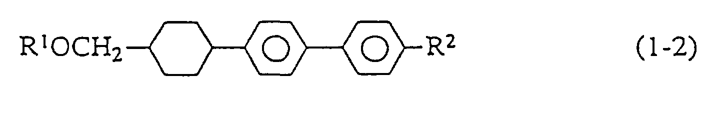 worin R¹ und R² unabhängig eine Alkyl-Gruppe mit 1 bis 10 Kohlenstoffatomen sind, und A, B und C unabhängig 1,4-Phenylen-Gruppe sind, worin Wasserstoffatom(e) an einer Seitenposition in dieser Gruppe durch Fluoratom(e) ersetzt sein können, und
umfassend als zweite Komponente zumindest eine Verbindung, ausgewählt aus der Gruppe von Verbindungen mit den allgemeinen Formeln (2), (3), (4) oder (5) in einer Menge von 50 bis 97 Gew.-%, bezogen auf die Gesamtmenge der Zusammensetzung: 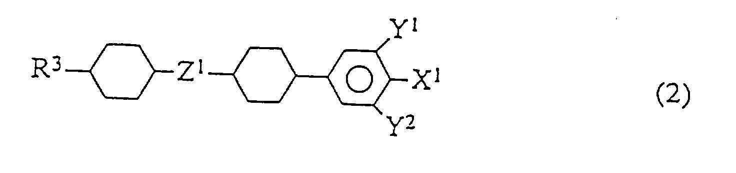 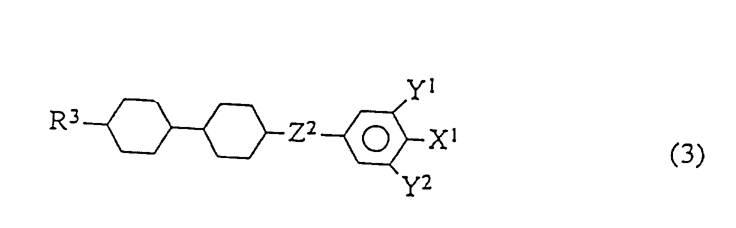 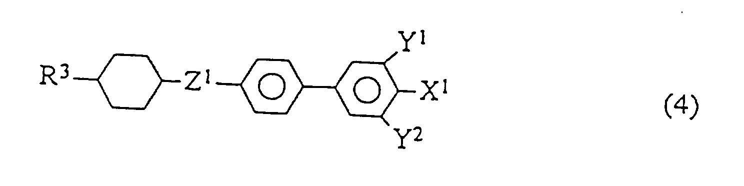 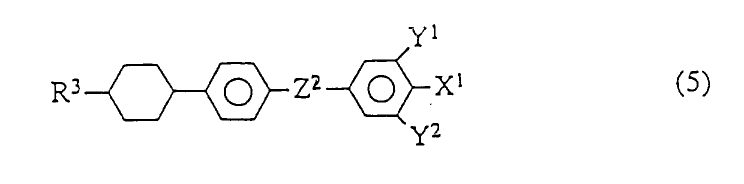 worin R³ eine Alkyl-Gruppe mit 1 bis 10 Kohlenstoffatomen ist; X¹ F, Cl, CF₃, OCF₃ oder OCHF₂ ist; Y¹ und Y² unabhängig H oder F sind; Z¹ -C₂H₄-, -C₄H₈- oder eine Einfachbindung ist; und Z² -C₂H₄-, -C₄H₈- oder -COO- ist.

2. Flüssigkristallzusammensetzung nach Anspruch 1, worin die Zusammensetzung weiterhin als dritte Komponente zumindest eine Verbindung mit der allgemeinen Formel (6) enthält: 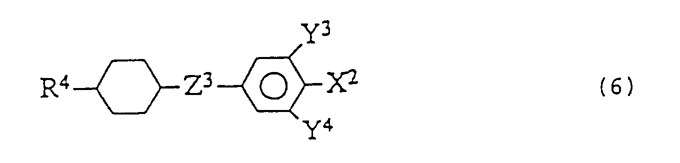 worin R⁴ eine Alkyl-Gruppe mit 1 bis 10 Kohlenstoffatomen ist, X² F oder Cl ist; Y³ und Y⁴ jeweils unabhängig H oder F sind; und Z³ -C₂H₄- oder eine Einfachbindung ist.

3. Flüssigkristallzusammensetzung nach Anspruch 1, worin die Zusammensetzung weiterhin als dritte Komponente zumindest eine Verbindung enthält, ausgewählt aus der Gruppe von Verbindungen mit der allgemeinen Formel (7) oder (8): 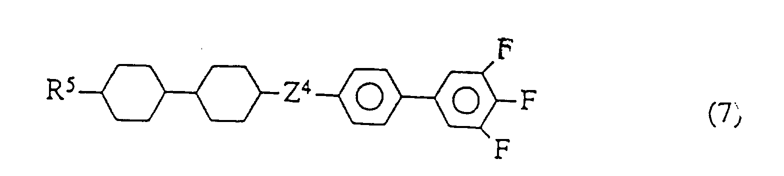 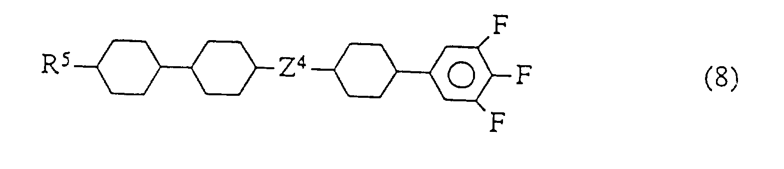 worin R⁵ eine Alkyl-Gruppe mit 1 bis 10 Kohlenstoffatomen ist und Z⁴ -C₂H₄- oder eine Einfachbindung ist.

4. Flüssigkristallzusammensetzung nach Anspruch 2, worin die Zusammensetzung weiterhin als vierte Komponente zumindest eine Verbindung enthält, ausgewählt aus der Gruppe mit der allgemeinen Formel (7) oder (8): 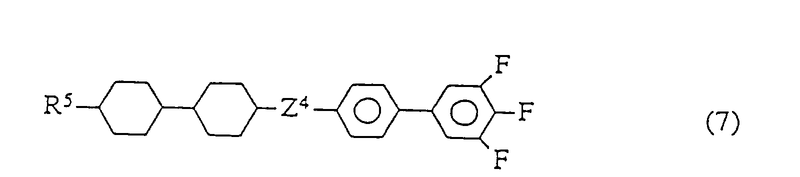 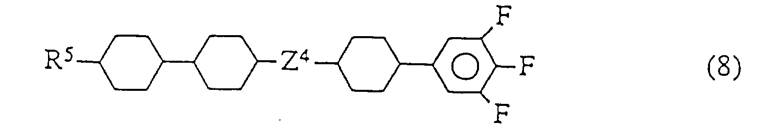 worin R⁵ eine Alkyl-Gruppe mit 1 bis 10 Kohlenstoffatomen ist und Z⁴ -C₂H₄- oder eine Einfachbindung ist.

5. Flüssigkristallzusammensetzung nach einem der Ansprüche 1 bis 4, worin die Zusammensetzung als dritte Komponente zumindest eine Verbindung enthält, ausgewählt aus der Gruppe von Verbindungen mit der allgemeinen Formel (9) oder (10): 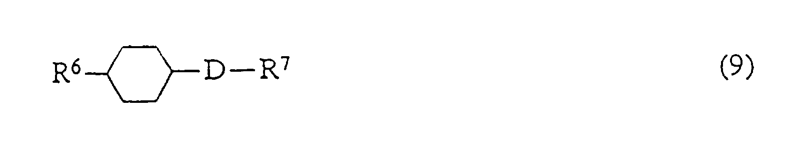 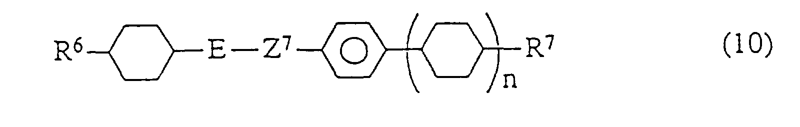 worin R⁶ und R⁷ unabhängig eine Alkyl-Gruppe, Alkoxy-Gruppe oder Oxaalkyl-Gruppe mit 1 bis 10 Kohlenstoffatomen sind; Z⁷ -CH=CH-, -C≡C- oder eine Einfachbindung ist; D trans-1,4-Cyclohexylen-Gruppe oder 1,4-Phenylen-Gruppe ist; E trans-1,4-Cyclohexylen-Gruppe oder 1,4-Phenylen-Gruppe ist, wobei ein oder mehrere Wasserstoffatome an einer Seitenposition der Phenylen-Gruppe durch ein oder mehrere Fluoratome ersetzt sein können; und n 0 oder 1 ist.

6. Flüssigkristallanzeigegerät, umfassend eine Flüssigkristallzusammensetzung nach einem der Ansprüche 1 bis 5.

## Revendications

1. Composition de cristaux liquides comprenant, en tant que premier constituant, au moins un composé choisi parmi le groupe de composés exprimé par la formule générale (1-1) ou (1-2) dans une proportion de 3 à 40 % en poids sur la base du poids total de la composition : 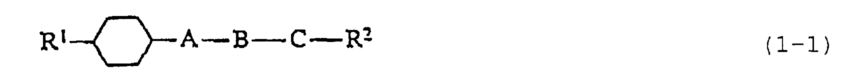 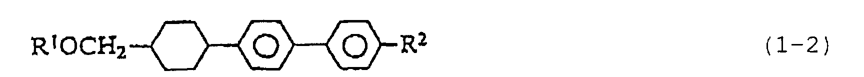 où R¹ et R² représentent indépendamment un groupement alkyle de 1 à 10 atomes de carbone, et A, B et C représentent indépendamment un groupement 1,4-phénylène, un ou des atomes d'hydrogène à une position latérale de ce groupement peuvent être remplacés par un ou des atomes de fluor, et
comprenant, en tant que second constituant, au moins un composé choisi parmi le groupe de composés exprimé par la formule générale (2), (3), (4) ou (5) dans une proportion de 50 à 97 % en poids sur la base de la quantité totale de la composition : 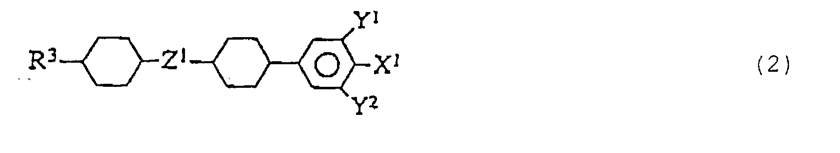 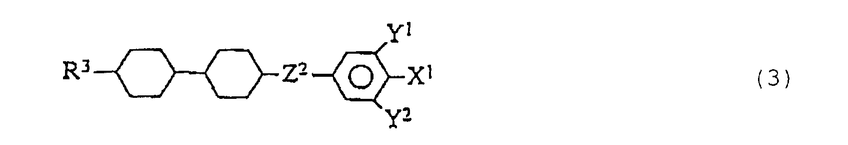 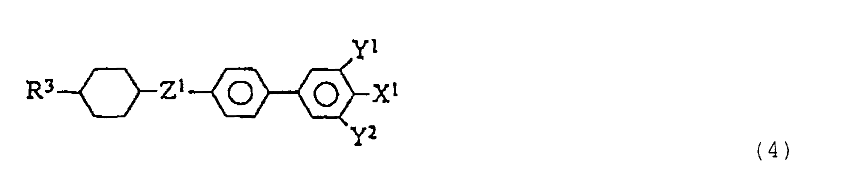 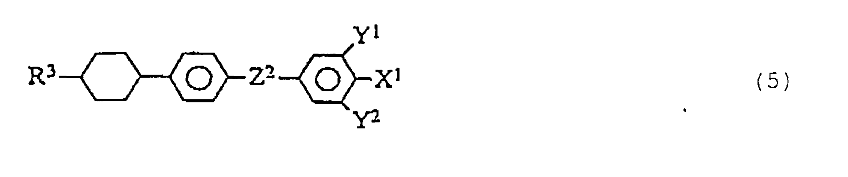 où R³ représente un groupement alkyle de 1 à 10 atomes de carbone, X¹ représente F, Cl, CF₃, OCF₃, ou OCHF₂, Y¹ et Y² représentent indépendamment H ou F, Z¹ représente -C₂H₄-, -C₄H₈- ou une simple liaison, et Z² représente -C₂H₄-, -C₄H₈- ou -COO-.

2. Composition de cristaux liquides selon la revendication 1, dans laquelle ladite composition comprend en outre, en tant que troisième constituant, au moins un composé exprimé par la formule générale (6) : 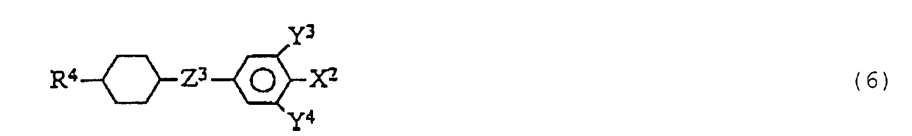 où R⁴ représente un groupement alkyle de 1 à 10 atomes de carbone, X² représente F ou Cl, chacun de Y³ et Y⁴ représente indépendamment H ou F, Z³ représente -C₂H₄- ou une simple liaison.

3. Composition de cristaux liquides selon la revendication 1, dans laquelle ladite composition comprend en outre, en tant que troisième constituant, au moins un composé choisi parmi le groupe de composés exprimé par la formule générale (7) ou (8) : 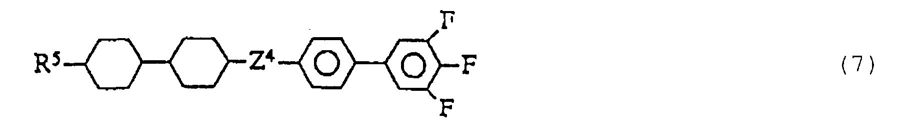 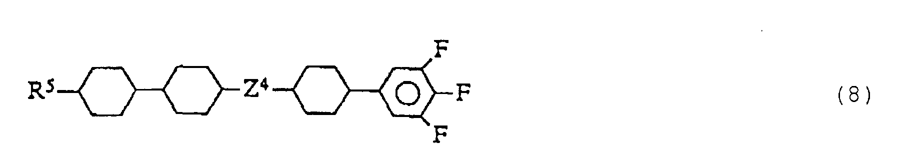 où R⁵ représente un groupement alkyle de 1 à 10 atomes de carbone, et Z⁴ représente -C₂H₄- ou une simple liaison.

4. Composition de cristaux liquides selon la revendication 2, dans laquelle ladite composition comprend en outre, en tant que quatrième constituant, au moins un élément choisi parmi le groupe exprimé par la formule générale (7) ou la formule générale (8) : 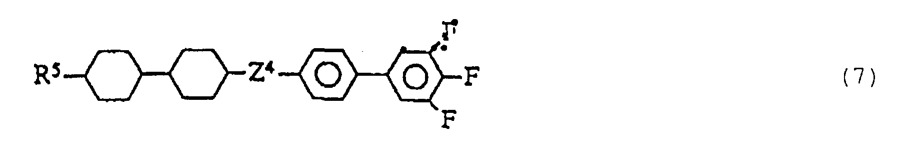 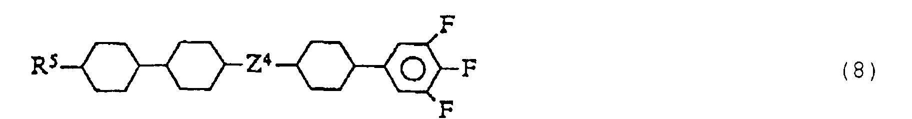 où R⁵ représente un groupement alkyle de 1 à 10 atomes de carbone, et Z⁴ représente -C₂H₄- ou une simple liaison.

5. Composition de cristaux liquides selon l'une quelconque des revendications 1 à 4, dans laquelle ladite composition comprend en outre, en tant que troisième constituant, au moins un composé choisi parmi le groupe de composés exprimé par la formule générale (9) ou (10) : 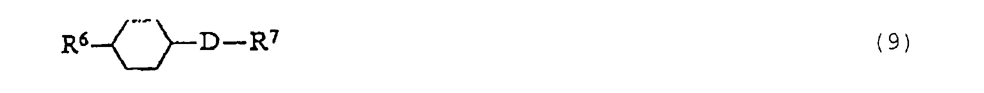 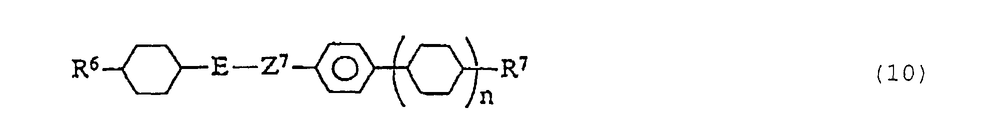 où R⁶ et R⁷ représentent indépendamment un groupement alkyle, un groupement alcoxy, un groupement oxa-alkyle de 1 à 10 atomes de carbone, Z⁷ représente -CH=CH-, -C≡C-, ou une simple liaison, D représente le groupement trans-1,4-cyclohexylène ou le groupement 1,4-phénylène, E représente le groupement trans-1,4-cyclohexylène ou le groupement 1,4-phénylène, un ou des atomes d'hydrogène au niveau d'une position latérale du groupement phénylène peuvent être remplacés par un ou des atomes de fluor, et n représente 0 ou 1.

6. Dispositif d'affichage à cristaux liquides comprenant une composition de cristaux liquides telle que définie dans l'une quelconque des revendications 1 à 5.
